# EUROPÄISCHE PATENTSCHRIFT

(11) **EP 0 696 601 B1**
(45) Veröffentlichungstag und Bekanntmachung des Hinweises auf die Patenterteilung: **29.12.1997**
(21) Anmeldenummer: 95111734.0
(22) Anmeldetag: 26.07.1995
(51) Int. Cl.: C08F 10/10, C08F 2/06, C08F 4/00

(54) **Verfahren zur Herstellung von Polyisoolefinen**
Process for producing polyisoolefins
Procédé pour la préparation de polyoléfines

(30) Priorität: 08.08.1994 DE 4428024
(43) Veröffentlichungstag der Anmeldung: 14.02.1996
(73) Patentinhaber: BAYER AG, 51368 Leverkusen (DE)
(72) Erfinder: Baade, Wolfgang, Dr., D-27793 Wildeshausen (DE); Heinrich, Roland, Dr., D-51373 Leverkussen (DE); Langstein, Gerhard, Dr., D-51515 Kürten (DE); Mulder, Thomas, Dr., D-51061 Köln (DE); Puskas, Judit, Dr., Corunna, NON 1G0 Ontario (CA)

(56) Entgegenhaltungen:
- EP-A- 0 025 530
- DE-B- 1 030 029
- DE-C- 818 695
- GB-A- 589 393
- GB-A- 699 770
- US-A- 2 456 354

## Beschreibung

Die vorliegende Erfindung bezieht sich auf ein Verfahren zur Herstellung von Polyisoolefinen, insbesondere von Butylkautschuk, durch Copolymerisation von Isoolefinen mit 4 bis 16 Kohlenstoffatomen und konjugierten Diolefinen mit 4 bis 6 Kohlenstoffatomen und/oder kationisch polymerisierbaren, ein- oder mehrfach ungesättigten, organischen Verbindungen mit 4 bis 16 Kohlenstoffatomen.

Aus Ullmanns Encyclopedia of Industrial Chemistry, Vol. A 23, 1993 ist die Copolymerisation von Isobuten mit konjugierten Dienen zu Butylkautschuk nach dem Slurry-Verfahren bekannt. Als Lösungsmittel bei diesem Verfahren dienen chlorierte Kohlenwasserstoffe. Nachteilig bei dem im technischen Maßstab durchgeführten Slurry-Verfahren ist das Auftreten von Belägen an den Reaktorwänden, wodurch die Abführung der Polymerisationswärme nachteilig beeinflußt wird. Soll nach dem Slurry-Verfahren beispielsweise Halobutylkautschuk hergestellt werden, so ist es von Nachteil, daß die Halogenierung des Butylkautschuks nicht direkt im Methylchlorid-Slurry erfolgen kann, sondern erst nach Lösen des bereits aufgearbeiteten Kautschuks in einem zusätzlichen Schritt in Hexan oder Lösen des Methylchlorid-Slurry ebenfalls in Hexan.

Es ist weiterhin bekannt, Isobutencopolymere nach dem Lösungsverfahren in Isopentan herzustellen. Beispielsweise werden Verfahren dieser Art beschrieben in US 2 356 128, US 3 361 725, GB 1 157 043, DE 2 328 541 und US 4 171 414. Nachteilig bei diesem Lösungsverfahren ist die relativ niedrige Konzentration des Polymeren in der Reaktionslösung im Vergleich zum zuvor genannten Slurry-Verfahren. Die niedrige Polymerkonzentration ist erforderlich, um eine zu hohe Viskosität der Reaktionslösung zu vermeiden und um die freiwerdende Wärme besser abführen zu können.

Darüber hinaus ist bekannt, Isobuten mit Hilfe von Lewis-Säuren in Gegenwart von flüssigem Kohlendioxid zu polymerisieren (R. H. Biddulplh und P.H. Plesch, J. Chem. Soc. (1960) 3913). Nachteilig bei diesem Verfahren ist der durch die physikalischen Eigenschaften des Kohlendioxids eingeschränkte Temperaturbereich für die Anwendung derartiger Slurry-Verfahren sowie die dabei auftretenden hohen Drücke. Zusätzlich ist es bei kontinuierlicher Fahrweise von Nachteil, daß an Rührer und Reaktorwänden Beläge auftreten, deren Beseitigung kostenaufwendig ist. Von Nachteil ist außerdem, daß bei diesem Verfahren Polymerisationsprodukte mit vergleichsweise niedrigem Molekulargewicht erhalten werden.

Es wurde nun gefunden, daß man die obengenannten Nachteile bei der Herstellung von Polyisoolefinen vermeiden kann, wenn man die Polymerisation in Gegenwart einer Mischung aus Kohlendioxid und linearen, verzweigten und/oder cyclischen C₄-C₈-Alkanen durchführt.

Gegenstand der vorliegenden Erfindung ist demnach ein Verfahren zur Herstellung von Polyisoolefinen, das dadurch gekennzeichnet ist, daß man Isoolefine mit 4 bis 16 Kohlenstoffatomen, gegebenenfalls mit konjugierten Diolefinen mit 4 bis 6 Kohlenstoffatomen und/oder kationisch polymerisierbaren, ein- oder mehrfach ungesättigten, organischen Verbindungen mit 4 bis 16 Kohlenstoffatomen in Gegenwart von Mischungen aus Kohlendioxid und linearen, verzweigten und/oder cyclischen C₄-C₈-Alkanen sowie in Gegenwart von Katalysatoren bei Temperaturen von -70°C bis +20°C und Drücken von 1 bis 70 bar polymerisiert, wobei das Gewichtsverhältnis von Kohlendioxid zu Alkanen 10:90 bis 90:10 beträgt.

Bei der erfindungsgemäßen Polymerisation ist es von großer Bedeutung, die Mischung aus Kohlendioxid, Alkanen und Monomeren gut zu durchmischen, so daß die in Kohlendioxid dispergierte organische Phase eine mittlere Teilchengröße von <200 µm, bevorzugt 200 µm bis 1 mm, aufweist.

Als Isoolefine mit 4 bis 16 Kohlenstoffatomen, bevorzugt 4 bis 8 Kohlenstoffatomen, werden beispielsweise genannt: Isobuten, 2-Methylbuten-1, 3-Methylbuten-1, 4-Methylpenten-1 und β-Pinen, bevorzugt Isobuten und 2-Methylbuten-1; als konjugierte Diolefine mit 4 bis 6 Kohlenstoffatomen: Isopren, Butadien, 2,3-Dimethylbutadien, Cyclopentadien, Methylcyclopentadien, 1,3-Cyclohexadien, bevorzugt Isopren, und als kationisch polymerisierbare, ein- oder mehrfach ungesättigte, organische Verbindungen mit 4 bis 16 Kohlenstoffatomen, bevorzugt 4 bis 10 Kohlenstoffatomen: Styrol, 4-Methylstyrol, Divinylbenzol, α-Methylstyrol, Dimethylfulven, bevorzugt 4-Methylstyrol und Divinylbenzol.

Als lineare, verzweigte und/oder cyclische C₄-C₈-Alkane können in das erfindungsgemäße Verfahren eingesetzt werden: Pentane, Hexane, Heptane, Octane, Cyclopentan, Cyclohexan, Cyclooctan, Methylcyclopentan, 2-Methylpentan, 3-Methylpentan, 2-Methylbutan, bevorzugt Hexane und 2-Methylbutan.

Das Kohlendioxid kann sowohl in gasförmiger, flüssiger als auch in fester Form zu den genannten Alkanen gegeben werden.

Als Katalysatoren für das erfindungsgemäße Verfahren kommen sowohl die bekannten Friedel-Crafts-Katalysatoren in Frage als auch sogenannte multifunktionelle Initiatoren (siehe z.B. Y. Jiang und J. M. J. Fréchet, Polymer Preprints 26 (1989) 127).

Als Friedel-Crafts-Katalysatoren werden insbesondere genannt: AlCl₃, BCl₃, BF₃, Al(C₂H₅)Cl₂, TiCl₄, SnCl₄, bevorzugt AlCl₃ und BCl₃.

Als sogenannte multifunktionelle Initiatoren werden beispielsweise genannt: Poly[styrol-co-2-acetoxy-2-(4-vinylphenyl)propan] (A) oder Poly[styrol-co-2-methoxy-2-(4-vinylphenyl)propan] (B) in Kombination mit Lewis Säuren BCl₃(C) oder TiCl₄(D), bevorzugt (A) in Kombination mit (C).

Die genannten Friedel-Crafts-Katalysatoren können in Mengen von 1 x 10⁻² bis 1 x 10⁻⁵ mol Initiator pro mol Monomer eingesetzt werden. Bevorzugt sind 1 x 10⁻³ bis 1 x 10⁻⁴ mol Initiator pro mol Monomer. Die genannten multifunktionellen Initiatoren können in Mengen von 1 mol Initiator pro mol Monomer bis 1 x 10⁻⁶ mol Initiator pro mol Monomer eingesetzt werden.

Bei dem erfindungsgemäßen Verfahren arbeitet man bevorzugt bei Temperaturen von 0°C bis -70°C und bei Drücken von 1 bis 40 bar.

Bevorzugt ist bei dem erfindungsgemäßen Verfahren ein Gewichtsverhältnis von Kohlendioxid zu den genannten Alkanen von 3 : 1 bis 1 : 4.

Falls nach dem erfindungsgemäßen Verfahren eine Copolymerisation der genannten Isoolefine mit den genannten konjugierten Diolefinen und/oder den kationisch polymerisierbaren, ein- oder mehrfach ungesättigten, organischen Verbindungen durchgeführt werden soll, ist ein Gewichtsverhältnis von Isoolefinen zu Diolefinen und ungesättigten organischen Verbindungen von 95:5 bis 99,5:0,5 bevorzugt.

Das erfindungsgemäße Verfahren kann sowohl in kontinuierlicher als auch in diskontinuierlicher Fahrweise durchgeführt werden.

In einer bevorzugten Ausführungsform wird das erfindungsgemäße Verfahren in der diskontinuierlichen Fahrweise beispielsweise wie folgt durchgeführt:

Der auf Reaktionstemperatur gekühlte Reaktor wird mit gereinigtem Hexan und den Monomeren beschickt. Nach Abkühlung des Reaktors auf oder unter -60°C wird die gewünschte Menge Kohlendioxid über ein Trockenmittel geleitet und einkondensiert. Nach Einstellung der Reaktionstemperatur wird der Katalysator zugepumpt oder über eine Schleuse zugegeben, wobei der Reaktorinhalt kräftig durchmischt wird. Alle Manipulationen werden unter Schutzgas durchgeführt. Der Verlauf der Reaktion wird anhand der Wärmeentwicklung verfolgt. Nach Beendigung der exothermen Reaktion wird mit 2,5-Di-tert.-butyl-4-methyl-phenol, gelöst in Ethanol, abgestoppt. Beim Erwärmen des Reaktors wird das Kohlendioxid, gegebenenfalls unter gleichzeitiger Zufuhr von warmem Hexan, entspannt. Die anfallende hexanische Lösung wird auf die übliche Art und Weise durch Strippen aufgearbeitet oder in einer nachfolgenden Reaktion einer Halogenierung oder einer anderen Modifizierung zugeführt (s. z.B. B. Vollmert, Grundriss der Makromolekularen Chemie, Karlsruhe, 1979).

Gegenüber den bekannten Lösungs- und Slurry-Verfahren bietet das oben dargestellte erfindungsgemäße Verfahren folgende Vorteile: weniger Belagsbildung, bessere Wärmeabfuhr und direkte chemische Modifizierung in Alkanlösung nach dem Entfernen des Kohlendioxids.

### Beispiele

### Beispiel 1

Ein 3-l-Hastelloy-Reaktor, der mit einem Ankerrührer ausgestattet war, wurde mit 1048 g getrocknetem n-Hexan beschickt. Davon wurden 200 ml abdestilliert. Der Reaktor wurde anschließend auf -60°C gekühlt. Über ein Tauchrohr wurden dann 300 g Isobuten einkondensiert. Das Isobuten wurde dabei zum Trocknen durch Molekularsieb (BAYLITH T 144) geleitet. Anschließend wurden nach dem gleichen Modus 900 g Kohlendioxid einkondensiert. Der Reaktor wurde auf -50°C erwärmt und der Katalysator über eine Schleuse zugegeben.

Die Katalysatorlösung stellt ein Gemisch aus 40 ml n-Hexan, 3,0 mmol Titantetrachlorid und 6,0 mmol Diethylaluminiumchlorid dar, das 19 h bei 25°C unter Lichtausschluß gerührt wurde. Nach 5 h wurde die Polymerisation durch Zugabe von 5 ml Ethanol (mit 1 % 2,6-Di-t-butyl-4-methyl-phenol) abgestoppt, der Reaktor aufgewärmt, das Kohlendioxid entspannt und das Polymer anschließend mit Ethanol ausgefällt.

Die Ausbeute betrug 101,2 g (33,7 %). Die Mooney-Viskosität (100°C, 4 min) betrug 67. Der Staudinger-Index (Toluol, 30°C) betrug 1,833 dl/g.

### Beispiel 2

Analog Beispiel 1 wurden 300 g Isobuten und 1800 g Kohlendioxid einkondensiert. Der Reaktor wurde auf -50°C gekühlt. Die Reaktion wurde durch Zugabe eines Gemisches aus 40 ml n-Hexan, 3 mmol Titantetrachlorid und 6 mmol Diethylaluminiumchlorid, das 23 h bei 25°C unter Lichtausschluß gerührt wurde, gestartet.

Es wurden 206,1 g Polymer isoliert. Der Mooney-Wert (100°C, 4 min) betrug 21,5, der Staudinder-Index (Toluol, 30°C) wurde mit 0,69 dl/g bestimmt.

### Beispiel 3

Es wurde ein Gemisch aus 707 g n-Hexan und 6,8 g Isopren vorgelegt, 400 g Isobuten und 900 g Kohlendioxid einkondensiert. Durch Zugabe eines Gemisches aus 60 ml n-Hexan, 7,5 mmol t-Butylchlorid und 14 mmol Diethylaluminiumchlorid wurde die Polymerisation bei -50°C gestartet. Es konnten 341,2 g Polymer (Staudinger-Index (Toluol, 30°C): 0,433 dl/g) isoliert werden.

## Patentansprüche

1. Verfahren zur Herstellung von Polyisoolefinen, dadurch gekennzeichnet, daß man Isoolefine mit 4 bis 16 Kohlenstoffatomen, gegebenenfalls mit konjugierten Diolefinen mit 4 bis 6 Kohlenstoffatomen und/oder kationisch polymerisierbaren, ein- oder mehrfach ungesättigten, organischen Verbindungen mit 4 bis 16 Kohlenstoffatomen in Gegenwart von Mischungen aus Kohlendioxid und linearen, verzweigten und/oder cyclischen C₄-C₈-Alkanen sowie in Gegenwart von Katalysatoren bei Temperaturen von-70°C bis +20°C und Drücken von 1 bis 70 bar polymerisiert, wobei das Gewichtsverhältnis von Kohlendioxid zu Alkanen 10:90 bis 90:10 beträgt.

2. Verfahren nach Anspruch 1, dadurch gekennzeichnet, daß die Reaktionsmischung in einer Weise durchmischt wird, daß die in Kohlendioxid dispergierte organische Phase eine mittlere Teilchengröße von <200 µm aufweist.

3. Verfahren gemäß den Ansprüchen 1 und 2, dadurch gekennzeichnet, daß man als Katalysatoren Friedel-Crafts-Katalysatoren einsetzt.

4. Verfahren nach Ansprüchen 1 bis 3, dadurch gekennzeichnet, daß man als Katalysatoren AlCl₃, TiCl₄, SnCl₄, BCl₃ und/oder (C₂H₅)AlCl₂ einsetzt.

5. Verfahren nach Ansprüchen 1 bis 4, dadurch gekennzeichnet, daß man die Katalysatoren in Mengen von 1 mol pro mol Monomer bis 1 x 10⁻⁶ mol pro mol Monomer einsetzt.

## Claims

1. Process for the production of polyisoolefins, characterised in that isolefins having 4 to 16 carbon atoms are polymerised optionally with conjugated diolefins having 4 to 6 carbon atoms and/or cationically polymerisable, mono- or polyunsaturated, organic compounds having 4 to 16 carbon atoms in the presence of mixtures of carbon dioxide and linear, branched and/or cyclic C₄-C₈ alkanes and in the presence of catalysts at temperatures of -70°C to +20°C and pressures of 1 to 70 bar, wherein the weight ratio of carbon dioxide to alkanes is 10:90 to 90:10.

2. Process according to claim 1, characterised in that the reaction mixture is mixed in such a manner that the organic phase dispersed in carbon dioxide has an average particle size of < 200 µm.

3. Process according to claims 1 and 2, characterised in that the catalysts used are Friedel-Crafts catalysts.

4. Process according to claims 1 to 3, characterised in that the catalysts used are AlCl₃, TiCl₄, SnCl₄, BCl₃ and/or (C₂H₅)AlCl₂.

5. Process according to claims 1 to 4, characterised in that the catalysts are used in quantities of 1 mol per mol of monomer to 1 × 10⁻⁶ mol per mol of monomer.

## Revendications

1. Procédé pour la préparation de polyisooléfines, caractérisé en ce qu'on polymérise des isooléfines contenant de 4 à 16 atomes de carbone éventuellement avec des dioléfines conjuguées contenant de 4 à 6 atomes de carbone et/ou avec des composés organiques une ou plusieurs fois insaturés, polymérisables par voie cationique, contenant de 4 à 16 atomes de carbone, en présence de mélanges de dioxyde de carbone et d'alcanes en C₄-C₈ linéaires, ramifiés et/ou cycliques, ainsi qu'en présence de catalyseurs, à des températures de -70°C à +20°C et sous des pressions de 1 à 70 bar, le rapport pondéral du dioxyde de carbone aux alcanes s'élevant de 10:90 à 90:10.

2. Procédé selon la revendication 1, caractérisé en ce qu'on malaxe le mélange réactionnel de telle sorte que la phase organique dispersée dans le dioxyde de carbone présente une granulométrie moyenne < 200 µm.

3. Procédé selon les revendications 1 et 2, caractérisé en ce qu'on met en oeuvre, à titre de catalyseurs, des catalyseurs de Friedel-Crafts.

4. Procédé selon les revendications 1 à 3, caractérisé en ce qu'on met en oeuvre, à titre de catalyseurs, AlCl₃, TiCl₄, SnCl₄, BCl₃ et/ou (C₂H₅)AlCl₂.

5. Procédé selon les revendications 1 à 4, caractérisé en ce qu'on met en oeuvre les catalyseurs dans des quantités de 1 mole par mole de monomère à 1 x 10⁻⁶ mole par mole de monomère.
